# EUROPÄISCHE PATENTSCHRIFT

(11) **EP 3 560 077 B1**
(45) Veröffentlichungstag und Bekanntmachung des Hinweises auf die Patenterteilung: **25.06.2025**
(21) Anmeldenummer: 17812257.8
(22) Anmeldetag: 07.11.2017
(51) Int. Cl.: H02K 3/52, H02K 15/095

(54) **VERFAHREN ZUM BEWICKELN UND KONTAKTIEREN EINES STATORS SOWIE STATOR FÜR EINEN ELEKTROMOTOR**
METHOD FOR WINDING AND CONTACTING A STATOR AND STATOR FOR AN ELECTRIC MOTOR
PROCÉDÉ D'ENROULEMENT ET DE MISE EN CONTACT D'UN STATOR AINSI QUE STATOR POUR UN MOTEUR ÉLECTRIQUE

(30) Priorität: 22.12.2016 DE 102016125373
(43) Veröffentlichungstag der Anmeldung: 30.10.2019
(73) Patentinhaber: Bühler Motor GmbH, 90459 Nürnberg (DE)
(72) Erfinder: BRETTSCHNEIDER, Jürgen, 90482 Nürnberg (DE); AHRENS, Matthias, 90455 Nürnberg (DE)
(86) Internationale Anmeldenummer: PCT/DE2017/200118
(87) Internationale Veröffentlichungsnummer: WO 2018/113854

(56) Entgegenhaltungen:
- EP-A1- 0 064 105
- EP-A1- 0 064 105
- EP-A1- 1 722 464
- EP-A1- 1 722 464
- EP-A2- 0 751 609
- EP-A2- 0 751 609
- DE-A1- 102006 037 758
- DE-A1- 102006 037 758
- DE-A1- 102013 111 868
- DE-A1- 102013 111 868
- DE-A1- 102014 007 549
- DE-A1- 102014 007 549
- DE-A1- 102015 200 095
- DE-A1- 102015 210 420
- DE-A1- 102015 210 420
- DE-A1- 102016 204 445
- DE-A1- 102016 204 445
- DE-U1- 8 624 505
- DE-U1- 8 624 505
- FR-A1- 2 986 384
- US-A1- 2008 073 986
- US-A1- 2008 073 986
- US-A1- 2015 042 180
- US-B2- 9 712 014

## Beschreibung

Die Erfindung betrifft ein Verfahren zum Bewickeln und Kontaktieren eines Stators und befasst sich ferner mit einem Stator für einen Elektromotor.

Aus EP 1 722 464 A1 ist bereits ein Verfahren zum Bewickeln eines Stators eines Elektromotors bekannt. Demnach wird bei dem bekannten Verfahren ein einziger Wickeldraht über mehrere Statorzähne gewickelt, wobei der Wickeldraht zwischen zwei unterschiedlichen Phasen zugeordneten Statorzähnen über ein Kontaktierelement geführt wird. Insgesamt sind drei Kontaktierelemente vorgesehen, wobei die Kontaktierelemente auf einem Träger angebracht sind, der einstückig mit einer Isolation des Stators ausgebildet ist.

Die Anordnung der Kontaktierelemente auf dem Träger führt bei dem bekannten Verfahren zum Bewickeln des Stators dazu, dass der Wickeldraht zu den einzelnen Kontaktierelementen in unterschiedlicher Art und Weise geführt werden muss. Dies erschwert die Automatisierung des Wickelverfahrens. Ferner ist es für eine maschinelle Wicklung notwendig, dass die Isolierung mit dem Träger exakt ausgerichtet bzw. positioniert ist, damit der Wickeldraht sicher über die einzelnen Kontaktierelemente geführt werden kann. Dies erfordert eine hohe Präzision bei der automatisierten Wicklung.

Aus der DE 10 2015 210 420 A1 ist ein Elektromotor bekannt, der einen in einem Statorgehäuse angeordneten Stator aufweist. Der Stator umfasst sechs Spulenwicklungen, die im Statorgehäuse ortsfest angeordnet sind. Koaxial zum Stator ist ein Schaltungsträger bzw. eine Leiterplatte vorgesehen, wobei der Schaltungsträger Durchführungen für Drähte der Wicklungen aufweist. Die Drähte werden nach Durchführung durch den Schaltungsträger umgeknickt und mit dem Schaltungsträger leitend verbunden. Die Spulenwicklung ist mit der Innenwand des Statorgehäuses durch Verguss mit einer aus Epoxidharz gebildeten Masse fixiert, wodurch eine elektrische Isolierung zwischen dem Statorgehäuse und den Spulenwicklungen 23 erreicht wird.

Die DE 10 2014 007 549 A1 offenbart einen Elektromotor, wobei der darin beschriebene Elektromotor das Ziel erreichen soll, eine möglichst hohe Leistungsdichte zu erwirken. Dazu wird vorgeschlagen, anstelle von Wicklungen Leiterstäbe einzusetzen. Ziel ist es dabei insbesondere, die Wicklungen vollständig durch Leiterstäbe zu ersetzen.

Aus der DE 10 2016 204 445 A1 ist ein Elektromotor bekannt, der insbesondere als Antriebsmotor für Hybrid-Fahrzeuge, der zwei Rotoren und einen axial dazwischen angeordneten Stator umfasst. Der Stator ist aus mehreren Ankerspulen gebildet, die jeweils aus einem mehrfach um einen Statorkern gewickeltes Metallband gewickelt sind. Jeweils ein Metallband umwickelt einen einzigen Statorkern.

Die EP 0 751 609 A2 offenbart einen Generator, insbesondere den Aufbau des Ankers des Generators, bei dem Zuleitungsdrähte in eine Leiterplatte geführt werden.

Aus der US 2008/073986 A1 ist ein Elektromotor bekannt, bei dem ein Permanentmagnet drehbar an einem Rotor angebracht oder in diesen eingebettet ist. Der Elektromotor umfasst einen Stator mit einer Statorspule um einen Isolator, eine gedruckte Leiterplatte, die an einem oberen Abschnitt des Stators befestigt ist und eine auf der Leiterplatte montierte angetriebene Vorrichtung sowie eine Halterung mit einem Heizelement.

Die Druckschrift DE 10 2006 037 758 A1 offenbart eine Statoranordnung für eine elektrische Maschine und ein Verfahren zum Herstellen einer Statoranordnung. Die Statoranordnung umfasst einen Statorkörper, der einen Rückschlussring und von dem Rückschlussring nach innen in radialer Richtung abstehende Statorzähne aufweist. Der Stator umfasst einen Statorkern aus gestanzten und paketierten Metallblechen und mindestens das oberste dieser Bleche ist al ein zusätzlicher ferromagnetischer Blechring ausgebildet , das sogenannten Statorendblech, das vorzugsweise aus demselben Material hergestellt ist wie die übrigen Bleche des Stapels, jedoch keine Statorzähne aufweist. Auf die Statorzähne sind Wicklungen aufgebracht, wobei die Wicklungen derjenigen Statorzähne, die zur selben Phase gehören, über ein Verbindungsdrahtstück verbunden sind. Das Statorendblech weist mehrere zungenartige Vorsprünge auf, die von dem Innenumfang des Statorendbleches abstehen und nach Art von Haken so gebogen sind, dass sie mit der Oberfläche des Statorendbleches vorzugsweise einen Winkel von 90 Grad einschließen, beispielsweise einen Winkel zwischen 70° und 80°, insbesondere einen Winkel von ungefähr 75°. Wenn auf einer Seite des Stator-Blechstapels mehrere Statorendbleche vorgesehen sind, weist vorzugsweise nur das am weitesten außen liegende Statorendblech die Vorsprünge auf. Die Vorsprünge führen und positionieren die Verbindungsdrahtstücke, welche die Statorzähne verbinden, die zur selben Phase gehören, so dass diese auf der Oberseite des Statorendbleches in der Nähe des Innenumfangs des Endbleches geführt werden. Das Umbiegen der Vorsprünge kann beispielsweise in einem Arbeitsgang beim Ausstanzen des Statorendbleches erfolgen. Die Vorsprünge sind zur Führung und Positionierung des Wickeldrahtes angeordnet.

Aus der Druckschrift DE 10 2013 111 868 A1 ist ein Stator für einen Elektromotor bekannt. Der Stator umfasst einen Statorkern an dem auf einer ersten oberen Seite ein Verschaltungsring und an einer zweiten unteren Seite ein zweiter Verschaltungsring angeordnet ist. Der Statorkern weist mehrere Statorpole auf, die von einem einzigen Wicklungsdraht oder durch Einzelwicklungen bewickelt sind. Am oberen Verschaltungsring sind metallische Kontaktelemente ausgebildet, die zur Führung des Wicklungsdrahtes zwischen den Kontaktelementen bzw. zwischen den Wicklungen ausgebildet sind. An den Kontaktelementen sind zudem Verbindungspunkte zur mechanischen und elektrischen Verbindung der Wicklungen angeordnet.

Die Druckschrift EP 0 064 105 A1 offenbart einen Stator eines vierphasigen Elektromotors sowie ein Verfahren zur Herstellung des Stators. Der Stator ist aus acht Statorkernen ausgebildet auf die ein Gehäuseträger montiert wird. Der Gehäuseträger bildet einen Teil der Isolation der Statorzähne wonach mit dem Wicklungsdraht mehrere Statorzähne umwickelt werden. Der Wicklungsdraht wird hier durch axial ausgerichtete elektrische Anschlussgehäuse am Gehäuseträger geführt. Dabei wird nach dem Umwickeln einer Spule der Wicklungsdraht durch einen Spulendraht-Einlassschlitz im Anschlussgehäuse geführt und positioniert und dann zur nächsten Spule am Gehäuseträger entlang geführt. Der Wicklungsdraht wird dabei durch Aussparungen an den Anschlussgehäusen geführt. Die Leitungsdrähte werden in die Gehäusehohlräume eingeführt, indem die Drähte seitlich ihrer Längsachsen in die Drahtaufnahmeschlitze der Gehäuse und in die Drahtaufnahmeschlitze der Anschlüsse bewegt werden. Die Leitungsdrähte werden um innere Abschnitte des Stators, über die Spulen und durch die Zugentlastungseinrichtung, zwischen einer Innenwand und zwei beabstandeten Außenwänden davon gekleidet. Die Wände und bilden einen begrenzten Durchgang zum Führen der Drähte vom Gehäuseträger und zum Aufbringen einer Klemmkraft auf die Drähte.

Die Druckschrift US 2015/042180 A1 offenbart einen Stator für einen, insbesondere bürstenlosen, Elektromotor, der eine Vielzahl von Blechkernen (Statorkerne), eine Vielzahl von Isolatoren, die an den jeweiligen Blechkernen befestigt sind und eine Vielzahl von Spulendrähten, die um die jeweiligen Isolatoren gewickelt sind. Der Stator umfasst zwölf Baugruppen und wird durch Verbinden der zwölf Baugruppen in einer im Wesentlichen ringförmigen Form gebildet. Eine im Wesentlichen ringförmige Verbindungsplatte ist auf der nicht belasteten Seite der zwölf Isolatoren vorgesehen und die Spulendraht-Endabschnitte sind mit Lötmittel an der Verbindungsplatte befestigt. Die Verbindungsplatte weist zwölf im Wesentlichen bogenförmige leitende Elemente und ein im Wesentlichen ringförmiges isolierendes Element auf. Das Isolierelement wird z. B. durch Einspritzgießen unter Verwendung eines Kunststoffmaterials gebildet und bedeckt zumindest teilweise die Oberflächen der zwölf leitenden Elemente. Nach dem Einspritzgießen werden die lastseitige Halterung und die nicht lastseitige Halterung an der Statorbaugruppe befestigt.

Die DE 10 2015 200 095 A1 offenbart einen Stator für eine elektrische Maschine sowie Verfahren zum Herstellen eines solchen, mit einem Statorkörper, der radiale Statorzähne aufweist, wobei jeder Statorzahn jeweils genau eine Teilspule einer elektrischen Wicklung aufnimmt, wobei die Wicklung genau aus zwei getrennten - aus genau zwei separaten Wickeldrähten gewickelten - Wicklungssträngen besteht, die jeweils drei Phasen mit jeweils mindestens zwei Teilspulen aufweisen.

Die FR 2 986 384 A1 offenbart einen Motor umfassend einen Stator mit Zähnen und eine Spulenanordnung mit einer Spule, die durch Wickeln eines elektrischen Drahtes um die Zähne gebildet wird. Eine Anschlussplatte verbindet die Spulenanordnung elektrisch mit einer elektrischen Stromquelle. Ein Ende der Spulenbaugruppe ist mit einem Ende einer anderen Spulenbaugruppe durch eine Verbindungsbrücke verbunden. Die Platte umfasst Anschlussschienen, die aus Schienenphasen bestehen. Jede Phase ist mit einem Haken einer elektrischen Anschlussphase versehen, die mit der Brücke verbunden ist, um die Brücke mit einer Phase der Quelle elektrisch zu verbinden.

Der Erfindung liegt daher die Aufgabe zugrunde, ein Verfahren zum Bewickeln und Kontaktieren eines Stators anzugeben, das einen hohen Automatisierungsgrad zulässt. Ferner ist es Aufgabe der Erfindung, einen Stator für einen Elektromotor anzugeben, der sich hochautomatisiert fertigen lässt.

Erfindungsgemäß wird diese Aufgabe im Hinblick auf das Verfahren durch den Gegenstand des Patentanspruchs 1 und im Hinblick auf den Stator durch den Gegenstand des Patentanspruchs 11 gelöst.

Die Erfindung beruht insbesondere auf dem Gedanken, ein Verfahren zum Bewickeln und Kontaktieren eines Stators anzugeben, wobei der Stator mehrere Statorzähne umfasst, die jeweils durch wenigstens einen Teil eines Statorkerns und wenigstens einen Teil einer Isolation gebildet sind. Das erfindungsgemäße Verfahren umfasst die folgenden Schritte:
- Bereitstellen eines Wicklungsdrahts, der einen Drahtanfang und ein Drahtende aufweist,
- Umwickeln mehrerer Statorzähne mit dem Wicklungsdraht zur Bildung mehrerer Spulen, wobei der Wicklungsdraht zwischen zwei Spulen zur Bildung einer Drahtschlaufe zumindest abschnittsweise um ein Drahtführungselement gelegt wird,
- Kontaktieren des Drahtanfangs und/oder des Drahtendes des Wicklungsdrahts auf einem von der Isolation separaten Kontaktträger und
- Abtrennen des Drahtführungselements, insbesondere entlang einer Trennstelle, von der Isolation und Befestigen des Drahtführungselements mit der Drahtschlaufe auf dem Kontaktträger.

Mit dem Wicklungsdraht kann durch Umwickeln mehrerer Statorzähne mehrere Spulen gebildet werden. Dabei kann der Wicklungsdraht zwischen zwei Spulen zur Bildung einer Drahtschlaufe zumindest abschnittsweise um ein Drahtführungselement gelegt werden. Mit anderen Worten ist bevorzugt vorgesehen, dass ein Wicklungsdraht, der mehrere Statorzähne umwickelt, abschnittsweise als Drahtschlaufe aus dem Stator vorsteht, wobei die Drahtschlaufe um ein Drahtführungselement gelegt wird. Durch das Drahtführungselement ist die Form und Dimension der Drahtschlaufe gut vorgegeben, so dass in der Fertigung bei mehreren Statoren identische Drahtschlaufen erzeugt werden. Im Wesentlichen bildet das Drahtführungselement also eine Führung für die Drahtschlaufe. Zusätzlich stellt das Drahtführungselement auch eine Positionierung der Drahtschlaufe an einer vorbestimmten Stelle sicher.

Durch die Kontaktierung des Drahtanfangs bzw. des Drahtendes auf einem von der Isolation separaten Kontaktträger werden die Verfahrensschritte zum Bewickeln des Stators und die Verfahrensschritte zum Kontaktieren des Drahtanfangs bzw. des Drahtendes voneinander getrennt. So lässt sich das Verfahren gut automatisieren. Insbesondere können das Bewickeln des Stators und das Kontaktieren des Drahtanfangs bzw. des Drahtendes auf unterschiedlichen Montagestationen erfolgen. Das ermöglicht es beispielsweise eine Kontaktierstation für unterschiedliche Statoren einzusetzen. Insbesondere kann so eine Kontaktierstation für unterschiedliche Fertigungslinien eingesetzt werden. Damit erhöht sich der Automatisierungsgrad in der Produktion, was schlussendlich zu geringeren Stückkosten führt.

Erfindungsgemäß ist vorgesehen, dass das Drahtführungselement, insbesondere entlang einer Trennstelle, von der Isolation abgetrennt und mit der Drahtschlaufe auf dem Kontaktträger befestigt wird. Das Drahtführungselement führt die vom Wicklungsdraht gebildete Drahtschlaufe. Durch die abtrennbare Befestigung des Drahtführungselements an der Isolation wird es ermöglicht, die Drahtschlaufe gezielt umzulenken und so auf dem Kontaktträger anzuordnen, dass eine Kontaktierung erfolgen kann. Die Nutzung des Drahtführungselements hat den besonderen Vorteil, dass das Drahtführungselement einerseits die Form der Drahtschlaufe vorgibt, so dass eine gleichmäßige Gestaltung der Drahtschlaufen sichergestellt ist. Andererseits ist damit der Vorteil verbunden, dass sich das Drahtführungselement gut greifen lässt und daher maschinell eine Umlenkung der Drahtschlaufe erleichtert. Gleichzeitig kann das Drahtführungselement als Halteelement dienen, das dafür sorgt, dass die Drahtschlaufe auf dem Kontaktträger in korrekter Position gehalten wird.

Bei einer bevorzugten Weiterbildung des erfindungsgemäßen Verfahrens ist vorgesehen, dass der Kontaktträger koaxial zum Statorkern angeordnet wird. Damit wird einerseits im Vergleich zum Stand der Technik, bei welchem der Kontaktträger seitlich von der äußeren Isolation absteht, eine kompakte Bauweise erreicht. Andererseits stellt die koaxiale Anordnung des Kontaktträgers sicher, dass sowohl der Drahtanfang, als auch das Drahtende im Wesentlichen identisch ausgerichtet werden können, um eine Kontaktierung herbeizuführen. Insbesondere können so alle zu kontaktierenden Drahtelemente radial bezogen auf den Stator ausgerichtet werden. Dies ist maschinell einfach und mit geringem Steuerungsaufwand möglich, wodurch sich eine Automatisierung in der Fertigung entsprechend vereinfachen lässt.

Konkret ist bei der Erfindung vorteilhaft vorgesehen, dass der Drahtanfang und/oder das Drahtende zum Kontaktieren radial nach innen umgebogen werden bzw. wird. Eine solche Umlenkung lässt sich steuerungstechnisch einfach durch eine entsprechende Fertigungsmaschine umsetzen. Eine solche Umlenkmaßnahme ist außerdem wenig fehlerbehaftet und verbessert so die Prozesssicherheit des Herstellungsverfahrens.

Das Drahtführungselement ist abtrennbar an der Isolation befestigt. Durch die Befestigung des Drahtführungselements an der Isolation ist gewährleistet, dass das Drahtführungselement bezogen auf den Stator korrekt ausgerichtet ist. Damit wird folglich ein Drahtverlauf des Wicklungsdrahts vorgegeben, so dass eine hohe Prozesssicherheit und Prozessgenauigkeit erreicht wird.

Vorzugsweise wird die Drahtschlaufe auf dem Kontaktträger kontaktiert. Wie zuvor bereits erläutert wurde, erfolgt die Kontaktierung vorzugsweise unabhängig bzw. zeitlich nachfolgend zur Wicklung der Statorzähne. Indem die Drahtschlaufe ebenfalls auf dem separat von der Isolation ausgebildeten Kontaktträger kontaktiert wird, wird vorteilhaft erreicht, dass zur Kontaktierung der relevanten Teile eines Wicklungsdrahts ein einziger Kontaktierschritt ausreichend ist. Dies verbessert ebenfalls den Automatisierungsgrad in der Produktion.

Die eigentliche Kontaktierung des Drahtanfangs und/oder des Drahtendes und/oder der Drahtschlaufe auf dem Kontaktträger kann in bevorzugten Ausführungsformen durch Klemmen und/oder Schneidklemmen und/oder Schweißen und/oder Löten erfolgen. Die vorgenannten Kontaktierungsarten ermöglichen so auf einfache Art und Weise die Herstellung einer elektrischen Verbindung zum Wicklungsdraht. Indem ein Drahtanfang und/oder ein Drahtende und/oder Drahtschlaufen kontaktiert werden, können dabei insbesondere mehrere elektrische Phasen zusammengeschalten werden. So kann der Stator mit einem einzigen Wicklungsdraht gewickelt werden, der einen Drahtanfang, ein Drahtende und Drahtschlaufen aufweist, wobei durch entsprechende Verschaltung von Drahtanfang, Drahtende und Drahtschlaufen unterschiedliche Phasen angesteuert werden können.

Bei einer weiteren bevorzugten Ausführungsform des erfindungsgemäßen Verfahrens ist bevorzugt vorgesehen, dass der Drahtanfang und/oder das Drahtende und/oder die Drahtschlaufe mittels eines auf dem Kontaktträger befestigten Kontaktelements oder mittels eines freien, mit dem Kontaktträger und/oder dem Drahtführungselement verbindbaren Kontaktelement elektrisch leitend kontaktiert werden/wird. Der Kontaktträger ist insofern vorteilhaft vorbereitet, um eine elektrische Verbindung, ggfs. auch Verschaltung, zwischen den einzelnen Drahtabschnitten des Wicklungsdrahts herzustellen.

In einer Variante des erfindungsgemäßen Verfahrens ist vorgesehen, dass der Wicklungsdraht zumindest abschnittsweise um unmittelbar benachbarte Statorzähne gewickelt wird, so dass wenigstens zwei Spulen einer Parallelwicklung gebildet werden. In einer alternativen Variante kann hingegen vorgesehen sein, dass der Wicklungsdraht zumindest abschnittsweise um einer gemeinsamen elektrischen Phase zugeordnete Statorzähne gewickelt wird, so dass wenigstens zwei Spulen einer Reihenwicklung gebildet werden. Mit anderen Worten ist das Verfahren geeignet, um sowohl Statoren mit einer Parallelwicklung, als auch Statoren mit einer Reihenwicklung herzustellen.

Gemäß einem weiteren Aspekt beruht die Erfindung auf dem Gedanken, einen Stator, der durch das Verfahren gemäß Anspruch 1 bewickelt und kontaktiert ist, für einen, insbesondere bürstenlosen, Elektromotor anzugeben, wobei der Stator mehrere Statorzähne aufweist, die jeweils durch wenigstens einen Teil eines Statorkerns und wenigstens einen Teil einer Isolation gebildet sind. Die Statorzähne sind dabei mit einem Wicklungsdraht umwickelt, der für jeden Statorzahn eine umgreifende Spule bildet und einen Drahtanfang und ein Drahtende aufweist. Erfindungsgemäß sind der Drahtanfang und/oder das Drahtende auf einem von der Isolation separaten Kontaktträger kontaktiert, wobei der Wicklungsdraht mehrere Spulen bildet und zwischen zwei Spulen zur Bildung einer Drahtschlaufe zumindest abschnittsweise um ein Drahtführungselement geführt ist. Das Drahtführungselement ermöglicht die Formgebung der Drahtschlaufe und dient außerdem zur Positionierung der Drahtschlaufe am Kontaktträger. Die im Zusammenhang mit dem zuvor beschriebenen Herstellungsverfahren genannten Vorteile und bevorzugten Weiterbildungen gelten analog auch für den erfindungsgemäßen Stator. Insbesondere lässt sich der erfindungsgemäße Stator gut automatisiert herstellen. Überdies ist die separate Anordnung eines Kontaktträgers, auf welchem der Drahtanfang und/oder das Drahtende kontaktiert sind, insoweit vorteilhaft, weil auf diese Weise die Wartungsfreundlichkeit verbessert wird.

Die Drahtschlaufe kann mit einem Kontaktelement auf dem Kontaktträger elektrisch leitend verbunden sein. Insbesondere kann das Drahtführungselement mit dem Kontaktträger verbunden sein. Mittels des Drahtführungselements kann die Drahtschlaufe an der richtigen Stelle am Kontaktträger positioniert und zu gehalten werden. Die Drahtschlaufe kann mittels des Drahtführungselements insbesondere am Kontaktelement gehalten werden. Auf diese Weise sorgt das Drahtführungselement für eine beständige elektrische Verbindung zwischen der Drahtschlaufe und dem Kontaktelement.

Der Kontaktträger kann bei bevorzugten Ausführungsformen des erfindungsgemäßen Stators Leiterbahnen zur elektrischen Verschaltung mehrerer Spulen aufweisen. Die Leiterbahnen können mit den Kontaktelementen elektrisch leitend verbunden sein. Der Kontaktträger dient somit auch zur Ansteuerung der einzelnen Phasen des Elektromotors, wobei die Spulen durch die Leiterbahnen elektrisch miteinander verschalten sind.

Der Kontaktträger und die Drahtführungselemente weisen vorzugsweise zueinander korrespondierende Verbindungskonturen auf. Insbesondere können die Drahtführungselemente formschlüssig mit dem Kontaktträger verbunden sein. Das erleichtert den Montagevorgang des erfindungsgemäßen Stators.

Bei einer weiteren Ausgestaltung des erfindungsgemäßen Stators kann besonders bevorzugt vorgesehen sein, dass die Isolation durch eine Isolierkappe oder einen an dem Statorkern angespritzten Werkstoff gebildet ist.

Die Erfindung wird im Folgenden anhand von Ausführungsbeispielen unter Bezugnahme auf die beigefügten, schematischen Zeichnungen näher erläutert. Darin zeigen:
- Fig. 1.:: eine perspektivische Ansicht eines Stators mit einer Isolierung und darin angebrachten Drahtführungselementen vor der Kombination mit einem separaten Kontaktträger;
- Fig. 2:: den Stator gemäß Fig. 1 mit einem separaten Kontaktträger;
- Fig. 3:: eine perspektivische Ansicht eines erfindungsgemäßen Stators mit einem Kontaktträger nach einem bevorzugten Ausführungsbeispiel;
- Fig. 4:: eine perspektivische Ansicht eines Stators mit einem Kontaktträger gemäß einem weiteren bevorzugten Ausführungsbeispiel; und
- Fig. 5:: eine perspektivische Ansicht eines erfindungsgemäßen Stators mit einer Kontaktplatte gemäß einem weiteren bevorzugten Ausführungsbeispiel.

Die in den Figuren dargestellten Ausführungsbeispiele zeigen jeweils einen Stator 10, der einen Statorkern 14 und eine Isolation 12 aufweist. Die Isolation 12 ist vorzugsweise aus einem elektrisch nicht leitenden Material gefertigt. Die Isolation 12 deckt insbesondere den Statorkern 14 in längsaxialer Richtung ab.

Die Isolation 12 kann als separate Isolierkappe ausgebildet sein, die auf dem Statorkern aufgelegt ist. Die Isolierkappe kann mit dem Statorkern 14 verbunden sein, wobei die Verbindung allein durch die Spulen 23 gebildet sein kann. Alternativ ist es möglich, die Isolation 12 an den Statorkern 14 mittels Spritzgusstechnik anzuspritzen.

Der Stator 10 weist mehrere radial nach innen ragende Statorzähne 11 auf, die jeweils teilweise aus dem Statorkern 14 und teilweise aus der Isolation 12 gebildet sind. Die Statorzähne 11 sind mit einem Wicklungsdraht umwickelt, wobei der Wicklungsdraht 20 für jeden Statorzahn 11 eine Spule 23 bildet. Bei den hier dargestellten Ausführungsbeispielen ist der gesamte Stator 10 mit einem einzigen Wicklungsdraht 20 gewickelt. Es ist jedoch auch möglich, dass der Stator 10 mit mehreren Wicklungsdrähten 20 gewickelt ist.

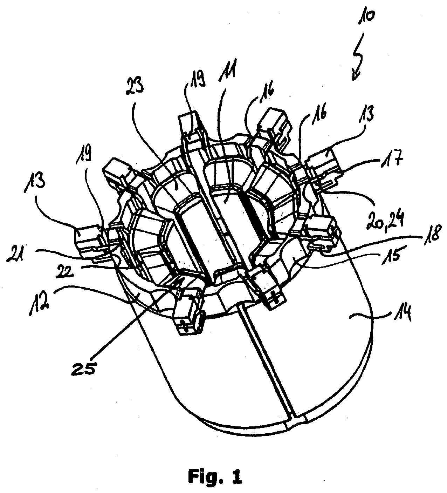

Der Wicklungsdraht 20 umfasst einen Drahtanfang 21 und ein Drahtende 22. Der Drahtanfang 21 und das Drahtende 22 sind längsaxial aus dem Stator herausgeführt. Insbesondere können der Drahtanfang 21 und das Drahtende 22 zwischen zwei Spulen 23 bzw. zwischen zwei Statorzähnen 11 längsaxial über die Isolation 12 vorstehen. In Fig. 1 ist die Anordnung des Drahtanfangs 21 und des Drahtendes 22 vor der elektrischen Kontaktierung des Wicklungsdrahts 20 erkennbar. Fig. 1 zeigt insoweit den Zustand des Stators 10 mit dem Wicklungsdraht 20 unmittelbar nach dem Bewickeln. Das Bewickeln erfolgt vorzugsweise durch ein Nadelwickelverfahren.

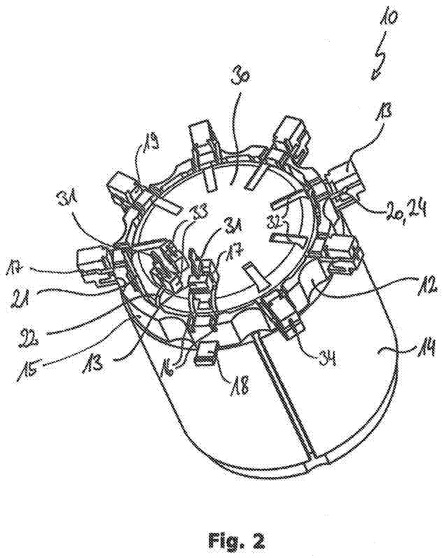

In Fig. 1 ist ebenfalls gut erkennbar, dass die Isolation 12 einen Ringflansch 15 bildet, der längsaxial über die Statorzähne 11 vorsteht. Auf diese Weise ist ein Aufnahmeraum 25 gebildet, in welchen ein Kontaktträger 30 eingelegt werden kann. Der Kontaktträger 30 wird später anhand der Figuren 2-5 näher beschrieben.

Bei dem Ausführungsbeispiel gemäß Figuren 1 und 2 sind an der Isolation 12, insbesondere am Ringflansch 15, radial nach außen gerichtete Drahtführungselemente 13 vorgesehen. Die Drahtführungselemente 13 sind jeweils über einen Verbindungssteg 18 mit der Isolation 12 verbunden. Der Verbindungssteg 18 ist vorzugsweise so gestaltet, dass das Drahtführungselement 13 von der Isolation 12 abtrennbar ist. Insbesondere ist der Verbindungssteg 18 brechbar, schneidbar oder (ab)zwickbar, so dass das Drahtführungselement 13 abgelöst werden kann. Der Verbindungssteg 18 weist dazu vorzugsweise eine Trennstelle bzw. Sollbruchstelle auf.

Die Drahtführungselemente 13 umfassen ferner jeweils einen Drahtführungsspalt 17, in welchem eine Drahtschlaufe 24 des Wicklungsdrahts 20 eingelegt ist. Der Drahtführungsspalt 17 bildet insoweit eine Aufnahmekontur für Drahtschlaufen 24. Ferner weisen die Drahtführungselemente 13 jeweils einen Schwalbenschwanzfortsatz 19 auf. Der sich im Wesentlichen senkrecht zum Drahtführungsspalt 17 und parallel zum Ringflansch 15 erstreckt. Der Schwalbenschwanzfortsatz 19 verläuft insbesondere in längsaxialer Richtung bezogen auf den Stator 10. Mittels des Schwalbenschwanzfortsatzes 19 ist das Drahtführungselement 13 formschlüssig mit einer entsprechenden Aufnahmenut 32 am Kontaktträger 30 verbindbar.

Fig. 1 zeigt den Stator 10 unmittelbar nach dem Bewickeln mit einem Wicklungsdraht 20. Der Wicklungsdraht 20 wird dabei mehrfach um einzelne Statorzähne 11 geführt, so dass sich Spulen 23 bilden. Zwischen den Spulen 23 wird der Wicklungsdraht längsaxial nach außen geführt und radial nach außen umgelenkt. Der radial nach außen umgelenkte Wicklungsdraht 20 wird in die Aufnahmekonturen der Drahtführungselemente 13, insbesondere in die Drahtführungsspalten 17, eingelegt und umgelenkt, so dass sich an den Drahtführungselementen 13 U-förmige Drahtschlaufen 24 bilden. Der Wicklungsdraht wird daraufhin zurück an einen Statorzahn 11 geführt und bildet die nächste Spule 23.

Die Drahtschlaufen 24 können jeweils unmittelbar benachbarte Statorzähne 11 miteinander verbinden (Parallelwicklung). Alternativ ist es möglich, dass die Drahtschlaufen 24 zwischen zwei Abschnitten des Wicklungsdrahtes 20 gebildet sind, die Spulen 23 zugeordnet sind, die durch weitere Spulen 23 voneinander getrennt sind. Insbesondere können die Drahtschlaufen 24 zwei Spulen 23 elektrisch miteinander verbinden, die einer gemeinsamen Phase zugeordnet sind (Reihenwicklung).

Um die Führung der Drahtschlaufen 24 zu den Drahtführungselementen 13 zu erleichtern, ist bei der Isolation 12 bevorzugt vorgesehen, dass am Ringflansch 15 Drahtführungskerben 16 angeordnet sind. Die Drahtführungskerben 16 erstrecken sich vorzugsweise auf Höhe der Drahtführungsspalte 17 in den Drahtführungselementen 13 und geben auf diese Weise die U-förmige Kontur der Drahtschlaufen 24 vor. Nach dem Bewickeln des Stators 10 erfolgt das Kontaktieren des Wicklungsdrahts 20. Dazu ist ein separater Kontaktträger 30 vorgesehen, der bei dem Ausführungsbeispiel gemäß Fig. 2 im Wesentlichen als runde Scheibe ausgebildet ist. Der Kontaktträger 30 umfasst mehrere Aufnahmenuten 32, die ein Gegenelement zu den Schwalbenschwanzfortsätzen 19 der Drahtführungselemente 13 bilden. Die Aufnahmenuten 32 und Schwalbenschwanzfortsätze 19 bilden insoweit korrespondierende Verbindungskonturen. Die korrespondierenden Verbindungskonturen ermöglichen eine formschlüssige Verbindung zwischen den Drahtführungselementen 13 und dem Kontaktträger 30.

Ferner sind am Kontaktträger 30 zwei Drahtaufnahmen 33 ausgebildet. Die Drahtaufnahmen 33 weisen eine schlitzförmige Nut auf, in welche der Drahtanfang 21 oder das Drahtende 22 einlegbar sind. In Fig. 2 ist beispielhaft die elektrische Kontaktierung des Drahtendes 22 gezeigt. Der Drahtanfang 21 ist in dem Herstellzustand gemäß Fig. 2 noch nicht kontaktiert. Das Drahtende 22 ist dabei um den Kontaktträger 30 umgebogen und in die Drahtaufnahme 33 eingelegt. Die Drahtaufnahme 33 weist ferner einen Einsteckschlitz 34 auf, in den ein Kontaktelement 31 einsteckbar ist. Das Kontaktelement 31 kann eine Schneidkante aufweisen, die den Isolierlack des Wicklungsdrahts 20 soweit beschädigt, dass eine elektrische Verbindung zwischen dem Wicklungsdraht 20 und dem Kontaktelement 31 hergestellt ist. Das Kontaktelement 31 ist vorzugsweise durch das Einstecken im Einsteckschlitz 34 fixierbar, so dass keine zusätzliche Befestigung erforderlich ist.

Beispielhaft ist in Fig. 2 anhand eines Drahtführungselements 13 gezeigt, wie die Kontaktierung der Drahtschlaufen 24 am Kontaktträger 30 erfolgt. Das im Gegenuhrzeigersinn unmittelbar dem Drahtende 22 benachbarte Drahtführungselement 13 ist von dem Verbindungssteg 18 abgetrennt und zur Oberseite des Kontaktträgers 30 geführt. Dabei wird die Drahtschlaufe 24 umgebogen. Konkret bleibt die Drahtschlaufe 24 in den Drahtführungsspalt 17 positioniert. Die Drahtschlaufe 24 löst sich jedoch aus den Drahtführungskerben 16 im Ringflansch 15 der Isolation 12. Der Schwalbenschwanzfortsatz 19 des Drahtführungselements 13 ist in die Aufnahmenut 32 des Kontaktträgers 30 eingeführt und fixiert so das Drahtführungselement 13 am Kontaktträger 30. Das Drahtführungselement 13 weist analog zu den Drahtaufnahmen 33 am Kontaktträger 30 einen Einsteckschlitz 34 auf. Der Einsteckschlitz 34 erstreckt sich vorzugsweise rechtwinklig zum Drahtführungsspalt 17 und nimmt ein Kontaktelement 31 auf. Das Kontaktelement 31 ist im Einsteckschlitz 34 fixiert. Die elektrische Verbindung zwischen dem Kontaktelement 31 und der Drahtschlaufe 24 erfolgt ebenso wie die elektrische Verbindung zwischen dem Kontaktelement 31 und dem Drahtende 22 in der Drahtaufnahme 33.

Fig. 2 zeigt einen Vorteil der Erfindung besonders deutlich. Der Kontaktträger 30 kann bei der vorliegenden Erfindung so dimensioniert sein, dass er vollständig in den Aufnahmeraum 25, der durch den Ringflansch 15 gebildet ist, einsetzbar ist. Damit ist der gesamte Stator 10 im montierten Zustand sehr kompakt. Der Kontaktträger 30 weist vorzugsweise einen Durchmesser auf, der kleiner als der Innendurchmesser des Ringflansches 15 ist, so dass zwischen Ringflansch 15 und dem Kontaktträger 30 der Wicklungsdraht 20 längsaxial nach außen geführt werden kann.

Der Wicklungsdraht 20, insbesondere der Drahtanfang 21, das Drahtende 22 und die Drahtschlaufen 24, werden außerhalb der Isolation 12 radial nach innen umgebogen, um so eine Kontaktierung auf dem Kontaktträger 30 zu ermöglichen. Dieser Biegeprozess ist einfach und insbesondere auch automatisiert durchführbar. Ebenso ist die Verbindung des Drahtführungselements 13 mit dem Kontaktträger 30 einfach automatisierbar, da die Schwalbenschwanzfortsätze 19 und die entsprechenden Aufnahmenuten 32 miteinander verrasten können.

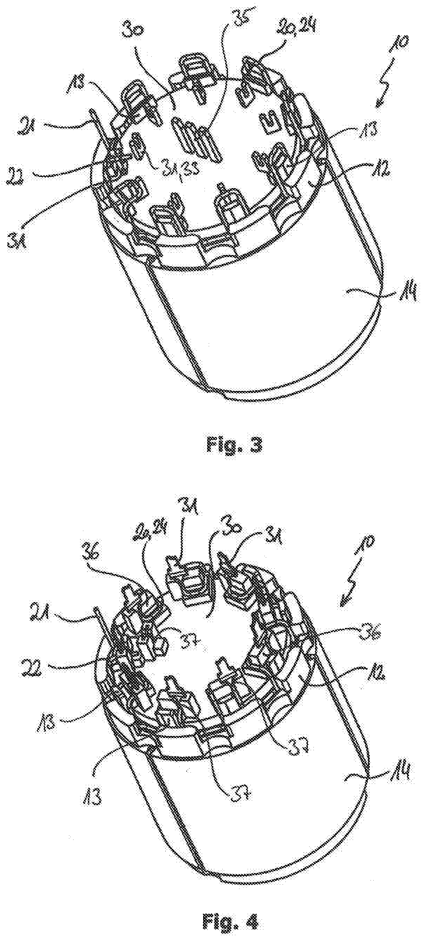

In den Figuren 3-5 sind alternative Ausführungsbeispiele der Erfindung gezeigt. Dabei unterscheiden sich die Ausführungsbeispiele gemäß Figuren 3-5 von den Ausführungsbeispielen gemäß Figuren 1 und 2 insbesondere durch die Gestaltung des Kontaktträgers 30 und der Isolation 12. Bei dem Ausführungsbeispiel gemäß Figuren 1 und 2 sind an der Isolation 12 Drahtführungselemente 13 über radial nach außen vorstehende Stege angeordnet, wobei die Drahtführungselemente 13 von den Verbindungsstegen 18 abtrennbar und umpositionierbar sind. Bei den Ausführungsbeispielen gemäß Figuren 3-5 ist hingegen vorgesehen, dass die Drahtführungselemente 13 sich längsaxial über den Ringflansch 15 erheben und ihre Position beibehalten. Die Drahtführungselemente 13 dienen bei den Ausführungsbeispielen gemäß Figuren 3-5 somit nicht zur Herstellung der Kontaktierung, sondern bilden vielmehr hauptsächlich ein Formgebungselement zur Bildung der Drahtschlaufen 24.

Hinsichtlich der Kontaktierung des Drahtanfangs 21 und des Drahtendes 22 unterscheiden sich die Ausführungsbeispiele gemäß Figuren 3-5 im Wesentlichen nicht von dem Ausführungsbeispiel gemäß Fig. 1. Der Drahtanfang 21 und das Drahtende 22 stehen nach dem Bewickeln des Stators 10 längsaxial über die Isolation 12 vor. Insbesondere erstrecken sich der Drahtanfang 21 und das Drahtende 22 zwischen dem Ringflansch 15 und dem Kontaktträger 30 hindurch. Zur Kontaktierung des Drahtanfangs 21 und des Drahtendes 22 werden der Drahtanfang 21 und das Drahtende 22 radial nach innen umgebogen und in Drahtaufnahmen 33 eingelegt.

Analoges gilt für die Drahtschlaufe 24. Die Drahtschlaufen 24 stehen nach dem Bewickeln des Stators 10 ebenfalls längsaxial über die Isolation 12 vor, wobei die Drahtschlaufen über die Drahtführungselemente 13 geführt sind. Die Drahtführungselemente 13 geben so die U-förmige Kontur der Drahtschlaufen 24 vor. Bei den Ausführungsbeispielen gemäß Figuren 3-5 ist jedoch vorgesehen, dass die Drahtschlaufen über die Drahtführungselemente 13 längsaxial soweit vorstehen, dass zwischen einer Oberkante der Drahtführungselemente 13 und der Drahtschlaufe 24 eine Öse gebildet ist. Die Drahtschlaufen 24 liegen somit nicht vollständig am Drahtführungselement 13 an. Zur Kontaktierung der Drahtschlaufen 24 sind diese ebenfalls radial nach innen umgebogen und in Drahtaufnahmen 33 am Kontaktträger 30 eingelegt.

Die Drahtaufnahmen 33 der Ausführungsbeispiele gemäß Figuren 3-5 unterscheiden sich voneinander. Bei dem Ausführungsbeispiel gemäß Fig. 3 sind am Kontaktträger unmittelbar Kontaktelemente 31 ausgebildet, die ein elektrisch leitendes Material aufweisen. Die Kontaktelemente 31 bilden gleichzeitig die Drahtaufnahmen 33. Die Kontaktelemente 31 weisen eine im Wesentlichen schneidende Innenkontur auf, so dass beim Einlegen des Wicklungsdrahts 20, insbesondere des Drahtanfangs 21 und des Drahtendes 22 und der Drahtschlaufen 24, ein Isolationslack beschädigt wird, so dass ein direkter elektrischer Kontakt zwischen dem Wicklungsdraht 20 und dem Kontaktelement 31 erfolgt. Bei dem Ausführungsbeispiel gemäß Fig. 3 erfolgt also durch Umbiegen und Eindrücken des Drahtanfangs 21, des Drahtendes 22 und der Drahtschlaufen 24 in die Kontaktelemente 31 sowohl eine mechanische, als auch eine elektrische Verbindung mit dem Kontaktträger 30.

In Fig. 3 ist außerdem ersichtlich, dass der Kontaktträger 30 eine Steckerkontur 35 aufweist. Innerhalb des Kontaktträgers 30 kann außerdem eine elektrische Verschaltung oder eine elektronische Steuerungsplatine angeordnet sein. Auf diese Weise ist die Ansteuerung der einzelnen Phasen des Stators 10 kompakt in den Kontaktträger 30 integrierbar.

Bei dem Ausführungsbeispiel gemäß Fig. 4 sind am Kontaktträger mehrere Drahtaufnahmen 33 angeordnet, die im Wesentlichen ähnlich wie bei dem Ausführungsbeispiel gemäß Figuren 1 und 2 hinsichtlich der Drahtaufnahmen 33 für den Drahtanfang 21 und das Drahtende 22 Einsteckschlitze 34 zur Aufnahme der Kontaktelemente 31 aufweisen. Die Drahtaufnahmen 33 bei dem Ausführungsbeispiel gemäß Fig. 4 weisen außerdem Schlaufenführungskonturen 36 auf. Die Schlaufenführungskonturen 36 sind unmittelbar am Kontaktträger 30 ausgebildet und nehmen die umgebogenen Drahtschlaufen 24 auf. Dabei werden die Drahtschlaufen 24 durch einen Aufnahmeschlitz 37 der Drahtaufnahme 33 geführt. Der Aufnahmeschlitz 37 erstreckt sich rechtwinklig zum Einsteckschlitz 34, in welchem die Kontaktelemente 31 eingeführt werden.

Die Drahtaufnahmen 33 für den Drahtanfang 21 und das Drahtende 22 weisen ebenfalls jeweils einen Aufnahmeschlitz 37 auf, der im Wesentlichen radial zum Kontaktträger 30 ausgerichtet ist. Der Drahtanfang 21 und das Drahtende 22 werden insofern radial nach innen umgelenkt und in den Aufnahmeschlitz 37 eingelegt. Anschließend wird ein Kontaktelement 31 in den Einsteckschlitz 34 gesteckt, der rechtwinklig zum Aufnahmeschlitz 37 ausgerichtet ist. Das Kontaktelement 31 weist vorzugsweise eine Schneidkante auf, die den Isolationslack des Wicklungsdrahts 20 beschädigt, so dass das Kontaktelement 31 elektrisch mit dem Drahtanfang 21 bzw. dem Drahtende 22 verbunden ist.

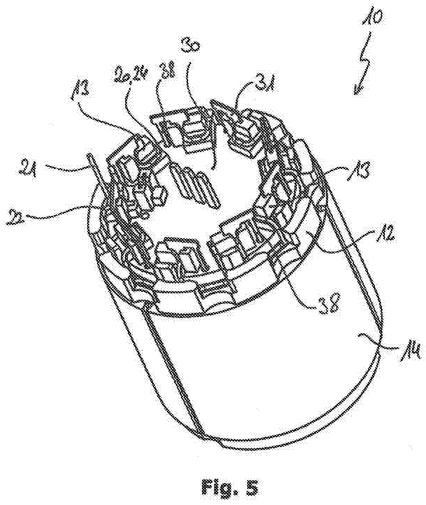

Das Ausführungsbeispiel gemäß Fig. 5 ist im Wesentlichen analog zu dem Ausführungsbeispiel gemäß Fig. 4 ausgebildet. Es unterscheidet sich lediglich durch die Art der Kontaktelemente 31. Bei dem Ausführungsbeispiel gemäß Fig. 5 ist insbesondere vorgesehen, dass die Kontaktelemente nicht nur in den Einsteckschlitz 34 der Drahtaufnahmen 33 eingreifen. Vielmehr weisen die Kontaktelemente 31 gemäß Fig. 5 jeweils einen zusätzlichen Kontaktfuß 38 auf, der unmittelbar mit dem Kontaktträger 30 verbindbar ist. Der Kontaktfuß 38 verläuft dabei neben der Drahtaufnahme 33 und ragt unmittelbar in den Kontaktträger 30 hinein. Der Kontaktfuß 38 kann am Kontaktträger 30 verlötet sein. Insofern kann der Kontaktfuß 38 eine elektrische Verbindung zwischen einer innerhalb des Kontaktträgers 30 ausgebildeten elektrischen Verschaltung und dem Wicklungsdraht 20 herstellen.

### Bezugszeichenliste

- 10: Stator
- 11: Statorzahn
- 12: Isolation
- 13: Drahtführungselement
- 14: Statorkern
- 15: Ringflansch
- 16: Drahtführungskerbe
- 17: Drahtführungsspalt
- 18: Verbindungssteg
- 19: Schwalbenschwanzfortsatz
- 20: Wicklungsdraht
- 21: Drahtanfang
- 22: Drahtende
- 23: Spule
- 24: Drahtschlaufe
- 25: Aufnahmeraum
- 30: Kontaktträger
- 31: Kontaktelement
- 32: Aufnahmenut
- 33: Drahtaufnahme
- 34: Einsteckschlitz
- 35: Steckerkontur
- 36: Schlaufenführungskontur
- 37: Aufnahmeschlitz
- 38: Kontaktfuß

## Patentansprüche

1. Verfahren zum Bewickeln und Kontaktieren eines Stators (10), der mehrere Statorzähne (11) umfasst, die jeweils durch wenigstens einen Teil eines Statorkerns (14) und wenigstens einen Teil einer Isolation (12) gebildet sind, wobei das Verfahren die folgenden Schritte umfasst:
- Bereitstellen eines Wicklungsdrahts (20), der einen Drahtanfang (21) und ein Drahtende (22) aufweist,
- Umwickeln mehrerer Statorzähne (11) mit dem Wicklungsdraht (20) zur Bildung mehrere Spulen (23), wobei der Wicklungsdraht (20) zwischen zwei Spulen (23) zur Bildung einer Drahtschlaufe (24) zumindest abschnittsweise um ein Drahtführungselement (13) gelegt wird,
- Kontaktieren des Drahtanfangs (21) und/oder des Drahtendes (22) des Wicklungsdrahts (20) auf einem von der Isolation (12) separaten Kontaktträger (30) und
- Abtrennen des Drahtführungselements (13), insbesondere entlang einer Trennstelle, von der Isolation (12) und Befestigen des Drahtführungselements (13) mit der Drahtschlaufe (24) auf dem Kontaktträger (30).

2. Verfahren nach Anspruch 1,
**dadurch gekennzeichnet, dass**
der Kontaktträger (30) koaxial zum Statorkern (14) angeordnet wird.

3. Verfahren nach Anspruch 1 oder 2,
**dadurch gekennzeichnet, dass**
der Drahtanfang (21) und/oder das Drahtende (22) zum Kontaktieren radial nach innen umgebogen werden/wird.

4. Verfahren nach einem der vorhergehenden Ansprüche,
**dadurch gekennzeichnet, dass**
das Drahtführungselement (13) abtrennbar an der Isolation (12) befestigt ist.

5. Verfahren nach einem der vorhergehenden Ansprüche,
**dadurch gekennzeichnet, dass**
die Drahtschlaufe (24) auf dem Kontaktträger (30) kontaktiert wird.

6. Verfahren nach einem der vorhergehenden Ansprüche,
**dadurch gekennzeichnet, dass**
die Kontaktierung des Drahtanfangs (21) und/oder des Drahtendes (22) und/oder der Drahtschlaufe (24) durch Klemmen und/oder Schneidklemmen und/oder Schweißen und/oder Löten erfolgt.

7. Verfahren nach einem der vorhergehenden Ansprüche,
**dadurch gekennzeichnet, dass**
der Drahtanfang (21) und/oder das Drahtende (22) und/oder die Drahtschlaufe (24) mittels eines auf dem Kontaktträger (30) befestigten Kontaktelements (31) oder mittels eines freien, mit dem Kontaktträger (30) und/oder dem Drahtführungselement (13) verbindbaren Kontaktelements (31) elektrisch leitend kontaktiert werden/wird.

8. Verfahren nach einem der vorhergehenden Ansprüche,
**dadurch gekennzeichnet, dass**
der Wicklungsdraht (20) zumindest abschnittsweise um unmittelbar benachbarte Statorzähne (11) gewickelt wird, so dass wenigstens zwei Spulen (23) einer Parallelwicklung gebildet werden.

9. Verfahren nach einem der einem der vorhergehenden Ansprüche,
**dadurch gekennzeichnet, dass**
der Wicklungsdraht (20) zumindest abschnittsweise um einer gemeinsamen elektrischen Phase zugeordnete Statorzähne (11) gewickelt wird, so dass wenigstens zwei Spulen (23) einer Reihenwicklung gebildet werden.

10. Stator (10), der durch das Verfahren gemäß Anspruch 1 bewickelt und kontaktiert ist, für einen, insbesondere bürstenlosen, Elektromotor, wobei der Stator (10) mehrere Statorzähne (11) aufweist, die jeweils durch wenigstens einen Teil eines Statorkerns (14) und wenigstens einen Teil einer Isolation (12) gebildet sind, wobei die Statorzähne (11) mit einem Wicklungsdraht (20) umwickelt sind, der für jeden Statorzahn (11) eine umgreifende Spule (23) bildet und einen Drahtanfang (21) und ein Drahtende (22) aufweist, wobei der Stator (10) ein Drahtführungselement (13) aufweist, wobei der Drahtanfang (21) und/oder das Drahtende (22) auf einem von der Isolation (12) separaten Kontaktträger (30) kontaktiert sind, wobei der Wicklungsdraht (20) mehrere Spulen (23) bildet und zwischen zwei Spulen (23) zur Bildung einer Drahtschlaufe (24) zumindest abschnittsweise um das Drahtführungselement (13) geführt ist,
**dadurch gekennzeichnet, dass**
das Drahtführungselement (13) abtrennbar an der Isolation (12) befestigt ist, und wobei das Drahtführungselement (13) so konfiguriert ist, dass das Drahtführungselement (13) von der Isolation (12) abgetrennt und mit der Drahtschlaufe (24) auf dem Kontaktträger (30) befestigt ist.

11. Stator (10) nach Anspruch 10,
**dadurch gekennzeichnet, dass**
die Drahtschlaufe (24) mit einem Kontaktelement (31) auf dem Kontaktträger (30) elektrisch leitend verbunden ist.

12. Stator (10) nach Anspruch 10 oder 11,
**dadurch gekennzeichnet, dass**
das Drahtführungselement (13) mit dem Kontaktträger (30) verbunden ist.

13. Stator (10) nach Anspruch 11 oder 12,
**dadurch gekennzeichnet, dass**
der Kontaktträger (30) Leiterbahnen zur elektrischen Verschaltung mehrerer Spulen (23) aufweist, wobei die Leiterbahnen mit den Kontaktelementen (31) elektrisch leitend verbunden sind.

14. Stator (10) nach einem der Ansprüche 11 bis 13,
**dadurch gekennzeichnet, dass**
der Kontaktträger (30) und die Drahtführungselemente (13) zueinander korrespondierende Verbindungskonturen aufweisen.

15. Stator (10) nach einem der Ansprüche 11 bis 14,
**dadurch gekennzeichnet, dass**
die Isolation (12) durch eine Isolierkappe oder einen an den Statorkern (14) angespritzten Werkstoff gebildet ist.

## Claims

1. Method for winding and contacting a stator (10) comprising a plurality of stator teeth (11) that are each formed by at least one part of a stator core (14) and at least one part of an insulation (12), wherein the method comprises the following steps:
- providing a winding wire (20) having a wire start (21) and a wire end (22),
- winding the winding wire (20) around a plurality of stator teeth (11) in order to form a plurality of coils (23), wherein between two coils (23) the winding wire (20) is positioned at least in some portions around a wire guidance element (13) in order to form a wire loop (24),
- contacting the wire start (21) and/or the wire end (22) of the winding wire (20) on a contact support (30) that is separate from the insulation (12) and
- detaching the wire guidance element (13) from the insulation (12), in particular along a separation point, and fastening the wire guidance element (13) to the wire loop (24) on the contact support (30).

2. Method according to claim 1,
**characterised in that**
the contact support (30) is arranged coaxially with the stator core (14).

3. Method according to claim 1 or claim 2,
**characterised in that**
the wire start (21) and/or the wire end (22) is/are bent over radially inwards for the purpose of contacting.

4. Method according to any of the preceding claims,
**characterised in that**
the wire guidance element (13) is detachably fastened to the insulation (12).

5. Method according to any of the preceding claims,
**characterised in that**
the wire loop (24) is contacted on the contact support (30).

6. Method according to any of the preceding claims,
**characterised in that**
the wire start (21) and/or the wire end (22) and/or the wire loop (24) is/are contacted by clamping and/or by insulation displacement and/or by welding and/or by soldering.

7. Method according to any of the preceding claims,
**characterised in that**
the wire start (21) and/or the wire end (22) and/or the wire loop (24) is/are contacted in an electrically conductive manner by means of a contact element (31) fastened to the contact support (30) and/or by means of a free contact element (31) that can be connected to the contact support (30) and/or to the wire guidance element (13).

8. Method according to any of the preceding claims,
**characterised in that**
the winding wire (20) is wound at least in some portions around directly adjacent stator teeth (11) such as to form at least two coils (23) of a parallel winding.

9. Method according to any of the preceding claims,
**characterised in that**
the winding wire (20) is wound at least in some portions around stator teeth (11) assigned to a shared electrical phase, such as to form at least two coils (23) of a series winding.

10. Stator (10) wound and contacted by the method according to claim 1, for an electric motor, in particular a brushless electric motor, the stator (10) having a plurality of stator teeth (11) which are each formed by at least one part of a stator core (14) and at least one part of an insulation (12), a winding wire (20) being wound around the stator teeth (11), which winding wire forms an encompassing coil (23) for each stator tooth (11) and has a wire start (21) and a wire end (22), the stator (10) having a wire guidance element (13), the wire start (21) and/or the wire end (22) being contacted on a contact support (30) that is separate from the insulation (12), the winding wire (20) forming a plurality of coils (23) and being guided, between two coils (23), at least in some portions around the wire guidance element (13) in order to form a wire loop (24),
**characterised in that**
the wire guidance element (13) is detachably fastened to the insulation (12), and the wire guidance element (13) being configured such that the wire guidance element (13) is detached from the insulation (12) and fastened to the contact support (30) by the wire loop (24).

11. Stator (10) according to claim 10,
**characterised in that**
the wire loop (24) is connected to a contact element (31) on the contact support (30) in an electrically conductive manner.

12. Stator (10) according to claim 10 or claim 11,
**characterised in that**
the wire guidance element (13) is connected to the contact support (30).

13. Stator (10) according to claim 11 or claim 12,
**characterised in that**
the contact support (30) has conducting tracks for electrically interconnecting a plurality of coils (23), the conducting tracks being connected to the contact elements (31) in an electrically conductive manner.

14. Stator (10) according to any of claims 11 to 13,
**characterised in that**
the contact support (30) and the wire guidance elements (13) have mutually corresponding connection contours.

15. Stator (10) according to any of claims 11 to 14,
**characterised in that**
the insulation (12) is formed by an insulating cover or by a material that is injection-moulded onto the stator core (14).

## Revendications

1. Procédé pour enrouler et connecter un stator (10) qui comprend plusieurs dents de stator (11), chacune étant formée par au moins une partie d'un noyau de stator (14) et au moins une partie de l'isolation (12), le procédé comprenant les étapes suivantes :
- préparer un fil d'enroulement (20) qui présente un début de fil (21) et une fin de fil (22),
- enroulement du fil d'enroulement (20) autour de plusieurs dents de stator (11) pour former plusieurs bobines (23), le fil d'enroulement (20) étant placé au moins par sections entre deux bobines (23) autour d'un élément de guidage de fil (13) pour former une boucle de fil (24),
- mise en contact du début (21) et/ou de la fin (22) de fil d'enroulement (20) sur un support de contact (30) séparé de l'isolation (12) et
- séparation de l'élément de guidage de fil (13) de l'isolation (12), en particulier le long d'un point de séparation, et fixation de l'élément de guidage de fil (13) avec la boucle de fil (24) sur le support de contact (30).

2. Procédé selon la revendication 1, **caractérisé en ce que** le support de contact (30) est disposé coaxialement au noyau de stator (14).

3. Procédé selon la revendication 1 ou 2, **caractérisé en ce que** le début (21) et/ou la fin (22) de fil sont/est replié(s) radialement vers l'intérieur pour établir le contact.

4. Procédé selon l'une des revendications précédentes, **caractérisé en ce que** l'élément de guidage de fil (13) est fixé de manière amovible à l'isolation (12).

5. Procédé selon l'une des revendications précédentes, **caractérisé en ce que** la boucle de fil (24) est mise en contact sur le support de contact (30).

6. Procédé selon l'une des revendications précédentes, **caractérisé en ce que**
la mise en contact du début de fil (21) et/ou de la fin de fil (22) et/ou de la boucle de fil (24) s'effectue par serrage et/ou par pince coupante et/ou par soudage et/ou par brasage.

7. Procédé selon l'une des revendications précédentes, **caractérisé en ce que** le début de fil (21) et/ou la fin de fil (22) et/ou la boucle de fil (24) sont/est mis(es) en contact de manière électroconductrice au moyen d'un élément de contact (31) fixé sur le support de contact (30) ou au moyen d'un élément de contact (31) libre pouvant être relié au support de contact (30) et/ou à l'élément de guidage de fil (13).

8. Procédé selon l'une des revendications précédentes, **caractérisé en ce que** le fil d'enroulement (20) est enroulé au moins par sections autour de dents de stator (11) directement placées les unes à côté des autres, de sorte qu'au moins deux bobines (23) d'un enroulement parallèle sont formées.

9. Procédé selon l'une des revendications précédentes, **caractérisé en ce que**
le fil d'enroulement (20) est enroulé au moins par sections autour de dents de stator (11) associées à une phase électrique commune, de sorte qu'au moins deux bobines (23) d'un enroulement en série sont formées.

10. Stator (10) enroulé et mis en contact par le procédé selon la revendication 1, pour un moteur électrique, en particulier sans balais, le stator (10) présentant plusieurs dents de stator (11) qui sont chacune formées par au moins une partie d'un noyau de stator (14) et au moins une partie d'une isolation (12), les dents de stator (11) étant entourées d'un fil d'enroulement (20) qui forme une bobine enveloppante (23) pour chaque dent de stator (11) et qui présente un début de fil (21) et une fin de fil (22),
le stator (10) qui présente un élément de guidage de fil (13), le début de fil (21) et/ou la fin de fil (22) étant mis en contact sur un support de contact (30) séparé de l'isolation (12), le fil d'enroulement (20) formant plusieurs bobines (23) et étant guidé au moins par sections entre deux bobines (23) autour de l'élément de guidage de fil (13) pour former une boucle de fil (24),
**caractérisé en ce que** l'élément de guidage de fil (13) est fixé de manière amovible à l'isolation (12), et l'élément de guidage de fil (13) est configuré de telle sorte que l'élément de guidage de fil (13) est séparé de l'isolation (12) et fixé avec la boucle de fil (24) sur le support de contact (30).

11. Stator (10) selon la revendication 10, **caractérisé en ce que** la boucle de fil (24) est reliée de manière électroconductrice à un élément de contact (31) sur le support de contact (30).

12. Stator (10) selon la revendication 10 ou 11, **caractérisé en ce que** l'élément de guidage de fil (13) est relié au support de contact (30).

13. Stator (10) selon la revendication 11 ou 12, **caractérisé en ce que** le support de contact (30) présente des pistes conductrices pour le raccordement électrique de plusieurs bobines (23), les pistes conductrices étant reliées aux éléments de contact (31).

14. Stator (10) selon l'une des revendications 11 à 13, **caractérisé en ce que** le support de contact (30) et les éléments de guidage de fil (13) présentent des contours de liaison correspondants.

15. Stator (10) selon l'une des revendications 11 à 14, **caractérisé en ce que** l'isolation (12) est formée par un capuchon isolant ou par un matériau injecté sur le noyau du stator (14).
